**Europäisches Patentamt**

**European Patent Office**

**Office européen des brevets**

(19)

(11) Veröffentlichungsnummer : **0 059 905**
**B2**

(12)

# NEUE EUROPÄISCHE PATENTSCHRIFT

(45) Veröffentlichungstag der neuen Patentschrift :
**03.12.86**

(21) Anmeldenummer : **82101522.9**

(22) Anmeldetag : **27.02.82**

(51) Int. Cl.⁴ : **F 16 K 17/08**, F 16 K 43/00,
F 16 K 17/168

(54) **Sicherheitsventil.**

(30) Priorität : **10.03.81 DE 3108952**

(43) Veröffentlichungstag der Anmeldung :
**15.09.82 Patentblatt 82/37**

(45) Bekanntmachung des Hinweises auf die Patenterteilung : **11.07.84 Patentblatt 84/28**

(45) Bekanntmachung des Hinweises auf die Entscheidung
über den Einspruch : **03.12.86 Patentblatt 86/49**

(84) Benannte Vertragsstaaten :
**AT BE CH DE FR LI LU NL SE**

(56) Entgegenhaltungen :
DE-A- 2 658 721
DE-B- 1 650 544
DE-C- 1 934 732
FR-A- 2 313 612
GB-A- 1 501 161
"BRAUKMANN Service Buch 1979", Heinrich
Braukmann Armaturenfabrik GmbH, D-6950 Mos-
bach/Bardin, Seiten 94-95

(73) Patentinhaber : **Hans Sasserath & Co KG**
**Mühlenstrasse 100 Postfach 67/34**
**D-4052 Korschenbroich 1 (DE)**

(72) Erfinder : **Sasserath, Arend**
**Dahlener Strasse 693**
**D-4050 Mönchengladbach 2-Rheydt (DE)**
Erfinder : **Hecking, Willi**
**Andreasstrasse 21**
**D-4050 Mönchengladbach 2-Rheydt (DE)**

(74) Vertreter : **Wolgast, Rudolf, Dipl.-Chem. Dr. et al**
**Dipl.-Phys. Jürgen Weisse Dipl.Chem. Dr. Rudolf Wol-**
**gast Bökenbusch 41 Postfach 11 03 86**
**D-5620 Velbert 11 Langenberg (DE)**

**EP 0 059 905 B2**

**Beschreibung**

Die Erfindung betrifft ein Sicherheitsventil, insbesondere für geschlossene Heizungsanlagen oder Warmwasserbereiter, enthaltend ein Ventilgehäuse mit einem Einlaß- und einem Auslaßanschluß und einem eigenen Ventilsitz und eine in das Ventilgehäuse einsetzbare Sicherheitsventilbaugruppe, wobei diese Baugruppe besteht aus :

einem Gehäuseoberteil, der einen mit Außengewinde versehenen Gewindestutzen bildet, einem Gehäuseunterteil, der einen mit Innengewinde versehenen, ersten Gewindestutzen bildet, an welchem sich innen eine innere Ringschulter anschließt und in den der Gehäuseoberteil mit seinem Gewindestutzen eingeschraubt ist, und der einen mit Außengewinde versehenen, zweiten Gewindestutzen aufweist, welcher in eine mit Innengewinde versehene Bohrung des Ventilgehäuses abdichtend eingeschraubt ist, an deren inneren Ende an dem Ventilgehäuse eine Ringschulter gebildet ist,

einer zwischen der Stirnfläche des Gewindestutzens des Gehäuseoberteils und der Ringschulter des Gehäuseunterteils eingespannten Membran,

einem mit der Membran verbundenen Ventilschließglied,

einer im Gehäuseoberteil angeordneten, auf das Ventilschließglied wirkenden, vorgespannten Belastungsfeder und

einem an einem rohrförmigen Ventilsitzkörper vorgesehenen Ventilsitz, der über Rippen mit dem Gehäuseunterteil verbunden ist und der auf seiner dem Ventilsitz der Baugruppe abgewandten Seite abdichtend auf den Ventilsitz des Ventilgehäuses aufgesetzt ist, wobei das Ventilgehäuse außen um den Ventilsitzkörper herum einen Ringraum bildet, der mit dem Auslaßanschluß in Verbindung steht, so daß der Ventilsitzkörper den Durchgang zwischen Einlaß- und Auslaßanschluß umschließt und mit dem Ventilschließglied zusammenwirkt, das bis zu einem vorgegebenen Einlaßdruck unter dem Einfluß der Belastungsfeder gegen die Wirkung des Einlaßdrucks auf dem Ventilsitz der Baugruppe aufsitzt und den Durchgang absperrt.

Sicherheitsventile sollen bei einem unzulässigen Überdruck im System, z. B. in einem Warmwasserbereiter oder einer geschlossenen Heizungsanlage, öffnen und Wasser abblasen. Das austretende Wasser wird über einen Auslaß abgeleitet. Solche Sicherheitsventile bilden üblicherweise einen Teil einer « Sicherheitsarmatur », bei welcher in einem Gehäuseteil ein Durchlaufkanal von einem Einlaß zu einem Auslaß vorgesehen ist und dieser Gehäuseteil gleichzeitig einen Gehäuseunterteil für Absperrventile, ein Sicherheitsventil und einen Rückflußverhinderer bildet. Der Auslaß des Sicherheitsventils ist dabei ein ebenfalls in dem Gehäuseteil vorgesehener Auslaßkanal, der zu einem Auslaßstutzen am Gehäuseteil führt (DE-C-1 934 732).

Bei einem Warmwasserbereiter spricht das Sicherheitsventil bei jedem Aufheizen des Warmwasserbereiters an und bläst eine geringe Wassermenge ab.

Das ist die normale Funktion. Bei Aufheizen dehnt sich das Wasser aus und diese Ausdehnung muß durch Abblasen einer geringen Wassermenge kompensiert werden. Das Sicherheitsventil spricht somit nicht nur im Falle irgendeiner Fehlfunktion im System an sondern ständig im normalen Betrieb. Dadurch ist das Sicherheitsventil in hohem Maße einem Verschleiß im Bereich des Ventilsitzes unterworfen. Dieser Verschleiß kann die Funktion des Sicherheitsventils beeinträchtigen. Es ist sehr aufwendig, wenn in einem solchen Fall die gesamte Sicherheitsarmatur ausgebaut und ausgetauscht werden muß.

Da an die Zuverlässigkeit solcher Sicherheitsventile durch behördliche Anordnungen hohe Anforderungen gestellt werden, ist es nicht zulässig und auch nicht sinnvoll, etwa bei Verschleiß des Ventilschließglieds nur den Ventiloberteil mit Ventilschließglied und Druckfeder auszutauschen und den Ventilunterteil, d. h. den Gußteil der Sicherheitsarmatur eingebaut zu lassen und weiter zu verwenden. Bei einem Austausch des Ventiloberteils allein wäre nämlich die Einhaltung des vorgeschriebenen Ansprechpunktes des Sicherheitsventils nicht mehr gewährleistet. Es ist erforderlich, jedes einzelne Sicherheitsventil werkseitig einzustellen und zu verplomben.

Durch die DE-B-1 650 544 ist ein Sicherheitsventil der vorliegen Art mit einem Ventilgehäuse bekannt, das einen Einlaß- und einen mit einem Abtropfrohr verbundenen Auslaß aufweist. In das Ventilgehäuse ist eine Sicherheitsventilbaugruppe eingesetzt. Diese Baugruppe enthält einen Gehäuseoberteil und einen Gehäuseunterteil, zwischen denen eine Membran eingespannt ist. An dem Gehäuseunterteil ist ein Ventilsitz angebracht, der über Rippen mit dem Gehäuseunterteil verbunden ist und abdichtend in das Ventilgehäuse so eingesetzt ist, daß er den Durchgang zwischen Einlaß- und Auslaßanschluß umschließt. Der Ventilsitz wirkt mit dem Ventilschließglied zusammen, das bei der DE-B-1 650 544 von dem mittleren Teil der Membran gebildet ist. Dieses Ventilschließglied sitzt bis zu einem vorgegebenen Einlaßdruck unter dem Einfluß einer im Gehäuseoberteil angeordneten Belastungsfeder gegen die Wirkung des Einlaßdrucks auf dem Ventilsitz auf und sperrt den Durchgang ab.

Eine ähnliche Anordnung ist in der DE-A-26 58 721 beschrieben.

Bei diesen bekannten Sicherheitsventilen ist somit der Ventilsitz mit dem Ventilschließglied und der Belastungsfeder in einem Gehäuse zu einer Sicherheitsventilbaugruppe vereinigt. Diese Sicherheitsventilbaugruppe wird in das Ventilgehäuse eingesetzt, welches einen Einlaßanschluß

und einen Auslaßanschluß enthält. Das gestattet einen Austausch der Sicherheitsventilbaugruppe im Falle einer Beschädigung z. B. des Ventilsitzes. Es handelt sich jedoch dabei um eine Sonderkonstruktion, bei der nicht, wie üblich der Ventilsitz einen Teil des in üblicher Weise als Gußteil ausgebildeten Ventilgehäuses darstellt. Die Anwendung der Konstruktion nach der DE-B-1 650 544 und der DE-A-26 58 721 macht es erforderlich, alle Sicherheitsventile in dieser Weise auszubilden, um, im Bedarfsfalle, einen Austausch der Sicherheitsventilbaugruppe vornehmen zu können. Dadurch wird die Fertigung wesentlich verteuert, obwohl ein solcher Austausch keineswegs bei allen im Einsatz befindlichen Sicherheitsventilen erforderlich wird.

Durch die im Oberbegriff des Patentanspruchs 1 berücksichtigte Veröffentlichung « Sicherheitsgruppen DGM SG 160, Baureihe ab 1976 » auf Seiten 94 und 95 in dem « BRAUKMANN Service Buch 1979 » der Braukmann Armaturenfabrik GmbH, D-6950 Mosbach, ist es bekannt, bei Beschädigung eines in einem Ventilgehäuse gebildeten Ventilsitzes einen Sicherheitsventil-Austauschteil mit eigenem Ventilsitz unter Zwischenlage eines Distanzringes abdichtend in das Ventilgehäuse einzusetzen. Der Ventilsitzkörper des Sicherheitsventil-Austauschteils sitzt dabei abdichtend auf dem beschädigten alten Ventilsitz des Ventilgehäuses auf. Ein mitgelieferter Teflonring gleicht Beschädigungen des alten Ventilsitzes im Gehäuse aus. Bei dieser bekannten Konstruktion ist der Sicherheitsventil-Austauschteil aus Bauteilen aufgebaut, die von den Bauteilen verschieden sind, aus denen das normale Sicherheitsventil aufgebaut ist.

Der Erfindung liegt die Aufgabe zugrunde, eine Konstruktion zu finden, die unter Einhaltung der sicherheitstechnischen Auflagen den Einbau standardisierter Sicherheitsventile mit einem im Ventilgehäuse vorgesehenen Ventilsitz gestattet, bei welcher aber im Falle eines Defekts der Ventilsitz mit Ventilschließglied und Belastungsfeder einfach durch eine patronartige Sicherheitsventilbaugruppe ersetzt werden können, die unter Verwendung von Teilen aufgebaut ist, die auch für ein standardisiertes Sicherheitsventil benutzt werden.

Ausgehend von einem Sicherheitsventil der eingangs definierten Art wird diese Aufgabe dadurch gelöst, daß

(a) der Ventilsitzkörper an seinem dem Ventilsitz abgewandten Ende auf der Innenseite eine Erweiterung aufweist, mit welcher er über den Ventilsitz des Ventilgehäuses greift und auf diesem mit metallischem Kontakt anliegt,

(b) der Außendurchmesser und das Gewinde des Gewindestutzens am Gehäuseoberteil denen des zweiten Gewindestutzens des Gehäuseunterteils entspricht,

(c) die am inneren Ende der mit Innengewinde versehenen Bohrung des Ventilgehäuses gebildete Ringschulter der inneren Ringschulter des unteren Gehäuseteils im Hinblick auf Form und Abmessung entspricht und

(d) der Gehäuseoberteil mit Membran und Ventilschließglied so bemessen ist, daß bei Einschrauben des Gehäuseoberteils in die Bohrung des Ventilgehäuses die Membran zwischen der Stirnfläche des Gewindestutzens des Gehäuseoberteils und der Ringschulter des Ventilgehäuses eingespannt ist und das Ventilschließglied auf dem Ventilsitz des Ventilgehäuses aufsitzt.

Bei der erfindungsgemäßen Konstruktion besitzt das Ventilgehäuse einen Ventilsitz. Es wird zunächst ein Sicherheitsventil eingebaut, das einen Gehäuseoberteil mit der Belastungsfeder, die Membran und das mit der Membran verbundene Ventilschließglied in Verbindung mit dem Ventilgehäuse in der Weise enthält, daß in standardisierter Weise die Membran zwischen dem Gehäuseoberteil und dem Ventilgehäuse eingespannt ist und das Ventilschließglied mit dem Ventilgehäuse vorgesehenen Ventilsitz zusammen arbeitet. Das so ausgebildete Sicherheitsventil wird werksseitig eingestellt und plombiert. Wenn bei einem Ventil der Ventilsitz beschädigt wird, dann wird der Gehäuseoberteil mit der Membran und dem Ventilschließglied abgenommen. Statt dessen wird dann eine Sicherheitsventilbaugruppe eingesetzt, die ihren eigenen Ventilsitz aufweist, der abdichtend an dem Ventilsitz des Ventilgehäuses anliegt. Die Strömung kann durch den Ringraum um den Ventilsitzkörper der Sicherheitsventilbaugruppe herumströmen. Eine solche Sicherheitsventilbaugruppe mit neuem Ventilsitz braucht nur dann eingebaut zu werden, wenn tatsächlich ein Sicherheitsventil defekt ist. Diese Sicherheitsventilbaugruppe kann ebenfalls werksseitig justiert und plombiert werden. Sie kann weitgehend aus den gleichen Bauteilen aufgebaut sein wie ein normales Sicherheitsventil.

Durch die spezielle Ausbildung der Bauteile der Sicherheitsventilbaugruppe wird erreicht, daß ein standardisiertes Sicherheitsventil mit einem Gehäuseoberteil des gleichen Typs aufgebaut werden kann wie er für die Sicherheitsventilbaugruppe Verwendung findet. Zur Herstellung eines standardisierten Sicherheitsventils wird ein solcher Gehäuseoberteil in die mit Innengewinde versehene Bohrung des Ventilgehäuses eingeschraubt, und das Ventilschließglied arbeitet mit dem Ventilsitz des Ventilgehäuses zusammen. Der metallische Kontakt zwischen Ventilsitz des Ventilgehäuses und Ventilsitzkörper der Sicherheitsventilbaugruppe erleichtert die Montage und gewährleistet definierte Abmessungen.

Eine weitere Ausgestaltung der Erfindung ist Gegenstand des Patentanspruchs 2.

Ein Ausführungsbeispiel der Erfindung ist nachstehend unter Bezugnahme auf die zugehörige Zeichnung näher erläutert, die einen Längsschnitt durch das Sicherheitsventil zeigt.

Das Sicherheitsventil enthält ein Ventilgehäuse 10 mit einem Einlaßanschluß 12 und einem Auslaßanschluß 14. In das Ventilgehäuse 10 ist eine Sicherheitsbaugruppe 16 eingesetzt. Die Sicherheitsbaugruppe enthält einen Gehäuseoberteil 18, einen in das Ventilgehäuse 10 eingesetzten Gehäuseunterteil 20 und eine zwischen Gehäuseoberteil 18 und Gehäuseunterteil 20 eingespannte Membran 22. Mit der Membran 22 ist ein Ventilschließglied 24 verbunden. Im Gehäuseoberteil 18 ist eine auf das Ventilschließglied 24 wirkende, vorgespannte Belastungsfeder 26 angeordnet. Mit dem Gehäuseunterteil 20 ist ein Ventilsitz 28 über Rippen 30 verbunden. Der Ventilsitz 28 ist in das Ventilgehäuse 10 so einsetzbar, daß er den Durchgang zwischen Einlaß- und Auslaßanschluß 12 bzw. 14 umschließt und mit dem Ventilschließglied 24 zusammenwirkt, das bis zu einem vorgegebenen Einlaßdruck unter dem Einfluß der Belastungsfeder 26 gegen die Wirkung des Einlaßdrucks auf dem Ventilsitz 28 aufsitzt und den Durchgang absperrt.

Das Ventilgehäuse 10 bildet ebenfalls einen Ventilsitz 32. Der Ventilsitz 28 der Sicherheitsventilbaugruppe 16 ist an einem rohrförmigen Ventilsitzkörper 34 vorgesehen, der auf seiner dem Ventilsitz abgewandten Seite abdichtend an dem Ventilsitz 32 des Ventilgehäuses 10 anliegt. Das Ventilgehäuse 10 bildet außen um den Ventilsitzkörper 34 herum einen Ringraum 36, der mit dem Auslaßanschluß 14 in Verbindung steht.

Der Gehäuseoberteil 18 bildet einen mit Außengewinde versehenen Gewindestutzen 38. Der Gehäuseunterteil 20 bildet einen mit Innengewinde versehenen ersten Gewindestutzen 40, an den sich innen eine innere Ringschulter 42 anschließt. Der Gehäuseoberteil 18 ist mit seinem Gewindestutzen 38 in den ersten Gewindestutzen 40 des Gehäuseunterteils 20 eingeschraubt. Die Membran ist zwischen der Stirnfläche des Gewindestutzens 38 des Gehäuseoberteils 18 und der Ringschulter 42 des Gehäuseunterteils 20 eingespannt. Weiterhin weist der Gehäuseunterteil 20 einen mit Außengewinde versehenen, zweiten Gewindestutzen 44 auf. Das Ventilgehäuse 10 besitzt eine mit Innengewinde versehene Bohrung 46, in welche der Gehäuseunterteil 20 mit seinem zweiten Gewindestutzen 44 eingeschraubt ist.

Der Außendurchmesser und Gewinde des Gewindestutzens 38 am Gehäuseoberteil entspricht denen des zweiten Gewindestutzens 44 des Gehäuseunterteils. An dem Ventilgehäuse 10 ist am inneren Ende der mit Innengewinde versehenen Bohrung 46 eine Ringschulter 48 gebildet, welche der inneren Ringschulter 42 des unteren Gehäuseteils 20 entspricht. Der obere Gehäuseteil 18 mit Membran 22 und Ventilschließglied 24 ist so bemessen, daß bei Einschrauben des oberen Gehäuseteils 18 in die Bohrung 46 des Ventilgehäuses 10 die Membran 22 zwischen der Stirnfläche des Gewindestutzens 38, des Gehäuseoberteils 18 und der Ringschulter 48 des Ventilgehäuses 10 eingespannt ist und das Ventilschließglied 24 auf dem Ventilsitz 32 des Ventilgehäuses aufsitzt. Es können auf diese Weise sowohl ein standardisiertes Sicherheitsventil als auch eine Sicherheitsventilbaugruppe der dargestellten Art weitgehend mit den gleichen Teilen aufgebaut werden. Für die Sicherheitsventilbaugruppe 16 kommt praktisch nur der Gehäuseunterteil 20 mit den Rippen 30 und dem Ventilsitzkörper 34 hinzu, der zwischen den Gehäuseoberteil 18 und das Ventilgehäuse 10 eingesetzt wird.

Bei der dargestellten Ausführungsform ist um den zweiten Gewindestutzen 44 des Gehäuseunterteils 20 herum eine äußere Ringschulter 50 gebildet, die an dem Ventilgehäuse 10 um die Bohrung 46 herum anliegt. Zwischen der Ringschulter 50 und dem Ventilgehäuse 10 ist eine Dichtung 52 eingesetzt. Die Länge des Ventilsitzkörpers 34 der Sicherheitsventilbaugruppe 16 ist etwa gleich dem axialen Abstand zwischen der um den zweiten Gewindestutzen 44 des Gehäuseunterteils 20 herum gebildeten Ringschulter 50 und der Stirnfläche 54 des ersten Gewindestutzens 40.

Bei der dargestellten Ausführung weist der Ventilsitzkörper 34 an seinem dem Ventilsitz 28 abgewandten Ende auf die Innenseite einer Erweiterung 56 auf, mit welcher er über den Ventilsitz 32 des Ventilgehäuses 10 greift und auf diesem mit metallischem Kontakt aufsitzt.

Die übrige Ausbildung des Sicherheitsventilgehäuses ist im wesentlich konventionell.

Die Belastungsfeder 26 stützt sich an einem Federwiderlager 58 ab. Mit dem als Ventilteller ausgebildeten Ventilschließglied 24 ist ein Ventilstößel 60 verbunden, der in seiner Führungshülse 62 geführt ist. An einem Bund 64 des Ventilstößels 60 liegt ein Federteller 66 an, auf den die Belastungsfeder 26 drückt. Das Federwiderlager 58 liegt an der Stirnseite der Führungshülse 62 an, die als Gewindehülse ausgebildet ist und in einem Gewindeteil 68 des Gehäuseoberteils 18 geführt ist. Die Führungshülse 62 bildet eine Stellschraube, mittels derer der Ansprechdruck des Sicherheitsventils einstellbar ist.

Ein Knopf 84 dient in üblicher Weise zum Anlüften des Sicherheitsventils. Er hat Hebenocken, die über korrespondierende Schrägen an dem Gehäuseoberteil 18 beim Drehen den Knopf 84 anheben und den Ventilstößel 60 über eine Sperrscheibe 85 mitnehmen. Außerdem nimmt der Knopf 84 eine Plombenscheibe 86 auf, die einmal die besonderen Daten des Sicherheitsventils trägt und zudem den gesamten Einstellmechanismus vor unbefugtem Zugang schützt.

## Patentansprüche

1. Sicherheitsventil, insbesondere für geschlossene Heizungsanlagen oder Warmwasserbereiter, enthaltend ein Ventilgehäuse (10) mit einem Einlaß- und einem Auslaßanschluß (12 bzw. 14) und einem eigenen Ventilsitz (32) und eine in das Ventilgehäuse (10) einsetzbare Sicherheitsventilbaugruppe (16), wobei diese Baugruppe besteht aus :

einem Gehäuseoberteil (18), der einen mit Außengewinde versehenen Gewindestutzen (38) bildet,

einem Gehäuseunterteil (20), der einen mit Innengewinde versehenen, ersten Gewindestutzen (40) bildet, an welchem sich innen eine innere Ringschulter (42) anschließt und in den der Gehäuseoberteil (18) mit seinem Gewindestutzen (38) eingeschraubt ist, und der einen mit Außengewinde versehenen, zweiten Gewindestutzen (44) aufweist, welcher in eine mit Innengewinde versehene Bohrung (46) des Ventilgehäuses (10) abdichtend eingeschraubt ist, an deren inneren Ende an dem Ventilgehäuse (10) eine Ringschulter (48) gebildet ist,

einer zwischen der Stirnfläche des Gewindestutzens (38) des Gehäuseoberteils (18) und der Ringschulter (42) des Gehäuseunterteils (20) eingespannten Membran (22),

einem mit der Membran (22) verbundenen Ventilschließglied (24),

einer im Gehäuseoberteil (19) angeordneten, auf das Ventilschließglied (24) wirkenden, vorgespannten Belastungsfeder (26) und

einem an einem rohrförmigen Ventilsitzkörper (34) vorgesehenen Ventilsitz (28), der über Rippen (30) mit dem Gehäuseunterteil (20) verbunden ist und der auf seiner dem Ventilsitz (28) der Baugruppe (16) abgewandten Seite abdichtend auf den Ventilsitz (32) des Ventilgehäuses (10) aufgesetzt ist, wobei das Ventilgehäuse (10) außen um den Ventilsitzkörper (34) herum einen Ringraum (36) bildet, der mit dem Auslaßanschluß (14) in Verbindung steht, so daß der Ventilsitzkörper (34) den Durchgang zwischen Einlaß- und Auslaßanschluß (12 bzw. 14) umschließt und mit dem Ventilschließglied (24) zusammenwirkt, das bis zu einem vorgegebenen Einlaßdruck unter dem Einfluß der Belastungsfeder (26) gegen die Wirkung des Einlaßdrucks auf dem Ventilsitz (28) der Baugruppe (16) aufsitzt und den Durchgang absperrt,
dadurch gekennzeichnet, daß

(a) der Ventilsitzkörper (34) an seinem dem Ventilsitz (28) abgewandten Ende auf der Innenseite eine Erweiterung (56) aufweist, mit welcher er über den Ventilsitz (32) des Ventilgehäuses (10) greift und auf diesem mit metallischem Kontakt anliegt,

(b) der Außendurchmesser und das Gewinde des Gewindestutzens (38) am Gehäuseoberteil (18) denen des zweiten Gewindestutzens (44) des Gehäuseunterteils (20) entspricht,

(c) die am inneren Ende der mit Innengewinde versehenen Bohrung (46) des Ventilgehäuses (10) gebildete Ringschulter (48) der inneren Ringschulter (42) des unteren Gehäuseteils (20) im Hinblick auf Form und Abmessung entspricht und

(d) der Gehäuseoberteil (18) mit Membran (22) und Ventilschließglied (24) so bemessen ist, daß bei Einschrauben des Gehäuseoberteils (18) in die Bohrung (46) des Ventilgehäuses (10) die Membran (22) zwischen der Stirnfläche des Gewindestutzens (38) des Gehäuseoberteils (18) und der Ringschulter (48) des Ventilgehäuses (10) eingespannt ist und das Ventilschließglied (24) auf dem Ventilsitz (32) des Ventilgehäuses (10) aufsitzt.

2. Sicherheitsventil nach Anspruch 1, dadurch gekennzeichnet, daß

(a) eine um den zweiten Gewindestutzen (44) des Gehäuseunterteils (20) herum gebildete äußere Ringschulter (50) an dem Ventilgehäuse (10) anliegt und

(b) die Länge des Ventilsitzkörpers (34) der Sicherheitsventilbaugruppe (16) etwa gleich dem axialen Abstand zwischen der um den zweiten Gewindestutzen (44) des Gehäuseunterteils (20) herum gebildeten Ringschulter (50) und der Stirnfläche des ersten Gewindestutzens (40) ist.

## Claims

1. Safety valve particularly for closed heating installations or hot-water boilers, comprising a valve housing (10) having an inlet port and an outlet port (12 and 14, respectively) and an own valve seat (32) and a safety valve assembly (16) adapted to be inserted into the valve housing (10), this assembly consisting of

an upper housing portion (18), which forms an externally threaded socket (38),

a lower housing portion (20), which forms a first internally threaded socket (40), which communicates, at the inner end thereof, with an inner annular shoulder (42) and into which socket (40) the upper housing portion (18) with its threaded socket (38) is screwed, and which lower housing portion (20) has a second externally threaded socket (44), which is screwed sealingly into an internally threaded bore (46) of the valve housing (10), an annular shoulder being formed at the inner end of the bore (46) on the valve housing (10),

a diaphragm (22) clamped between the end face of the threaded socket (38) of the upper housing portion (18) and the annular shoulder (42) of the lower housing portion (20),

a valve closing member (24) connected to the diaphragm (22),

a biased load spring (26) provided in the upper housing portion (19) and acting on the valve closing member (24), and

a valve seat (28) provided on a tubular valve seat body (34), which valve seat (28) is connected to the lower housing portion (20) through ribs (30) and which is sealingly placed on the valve seat (32) of the valve housing (10) on its side remote from the valve seat (28) of the assembly (16), the valve housing (10) forming an annulus (36) externally around the valve seat body (34), which annulus (36) communicates with the outlet port (14), such that the valve seat body (34) encloses the passage between the inlet port and the outlet port (12 and 14, respectively), and coacts with the valve closing member (24) which engages the valve seat (28) of the assembly (16) until a predetermined inlet pressure under the action of the load spring (26) against the action of the inlet pressure and closes the passage, characterized in that

(a) the valve seat body (34) has an enlarged portion (56) on the inside at is end remote from the valve seat (28), by means of which enlarged portion (56) the valve seat body (34) extends over the valve seat (32) of the valve housing (10) and engages with metallic contact the valve seat (32),

(b) the external diameter and the thread of the threaded socket (38) at the upper portion (18) correspond to those of the second threaded socket (44) of the lower housing portion (20),

(c) the annular shoulder (48) formed at the inner end of the internally threaded bore (46) of the valve housing (10) corresponds to the inner annular shoulder (42) of the lower housing portion (20) with regard to the form and dimension, and

(d) the upper housing portion (18) with diaphragm (22) and valve closing member (24) is dimensioned such that, when the upper housing portion (18) is screwed into the bore (46) of the valve housing (10), the diaphragm (22) is clamped between the end face of the threaded socket (38) of the upper housing portion (18) and the annular shoulder (48) of the valve housing (10), and the valve closing member (24) engages the valve seat (32) of the valve housing (10).

2. Safety valve as set forth in claim 1, characterized in that

(a) an outer annular shoulder (50) formed around the second threaded socket (44) of the lower housing portion (20) engages the valve housing (10), and

(b) the length of the valve seat body (34) of the safety valve assembly (16) is approximately equal to the axial distance between the annular shoulder (50) formed around the second threaded socket (44) of the lower housing portion (20) and the end face of the first threaded socket (40).

**Revendications**

1. Soupape de sécurité particulièrement pour des installations de chauffage fermées ou des chauffes-eau, comportant un boîtier de soupape (10) ayant un raccord d'entrée et un raccord de sortie (12 et 14) et un propre siège de soupape (32) et un ensemble formant une soupape de sécurité (16) qui peut être introduit dans le boîtier de soupape (10), cet ensemble comprenant :

une partie supérieure (18) du boîtier formant une tubulure filetée (38),

une partie inférieure (20) du boîtier formant une première tubulure taraudée (40) à laquelle fait suite, à l'intérieur, un épaulement annulaire (42), et dans laquelle la partie supérieure (18) du boîtier peut être vissée avec sa tubulure filetée (38), et qui présente une deuxième tubulure filetée (44) qui est vissée de manière étanchante dans un alésage taraudé (46) du boîtier de soupape (10) à l'extrémité intérieure duquel, au boîtier (10), est formé un épaulement annulaire (48),

un diaphragme (22) tendu entre la face de la tubulure filetée (38) de la partie supérieure (18) du boîtier et l'épaulement annulaire (42) de la partie inférieure (20) du boîtier,

un élément de fermeture de soupape (24) relié au diaphragme (22),

un ressort de charge (26) préchargé disposé dans la partie supérieure (18) du boîtier et agissant sur l'élément de fermeture de soupape (24), et

un siège de soupape (28) prévu sur un corps tubulaire de siège de soupape (34) et relié à la partie inférieure (20) du boîtier par l'intermédiaire d'ailettes (30), et qui, sur son côté opposé au siège de soupape (28) de l'ensemble (16), est posé de manière étanchante sur le siège de soupape (32) du boîtier de soupape (10), le boîtier de soupape (10) formant, à l'extérieur autour du corps de siège de soupape (34), un espacement annulaire (36) qui communique avec le raccord de sortie (14) de sorte que le siège de soupape (34) entoure le passage entre le raccord d'entrée et le raccord de sortie (12 et 14) et qu'il coopère avec l'élément de fermeture de soupape (24) qui, jusqu'à une pression d'entrée déterminée, est appliquée de manière étanchante contre le siège de soupape (28) de l'ensemble (16) sous l'action du ressort de charge (26) contre l'action de la pression d'entrée, et qui ferme le passage, caractérisée par le fait que

(a) le siège de soupape (34) présente, sur son extrémité opposée au siège de soupape (28) sur le côté intérieur, un élargissement (56) qui s'étend au-delà du siège de soupape (32) du boîtier de soupape (10), et qui est en contact métallique avec le boîtier de soupape (10),

(b) le diamètre extérieur et le filetage de la tubulure filetée (38) sur la partie supérieure (18) du boîtier correspondent à ceux de la deuxième tubulure filetée (44) de la partie inférieure (20) du boîtier,

(c) l'épaulement annulaire (48) formé sur le boîtier de soupape (10) à l'extrémité intérieure de l'alésage taraudé (46) correspond en forme et dimension à l'épaulement intérieur (42) de la partie inférieure (20) du boîtier, et

(d) la partie supérieure (18) du boîtier avec le diaphragme (22) et l'élément de fermeture de soupape (24) est dimensionnée de sorte que, lorsque la partie supérieure (18) du boîtier est vissée dans l'alésage (46) du boîtier de soupape (10), le diaphragme (22) est tendu entre la face de la tubulure filetée (38) de la partie supérieure (18) du boîtier et l'épaulement annulaire (48) du boîtier de soupape (10), et l'élément de fermeture de soupape (24) est appliqué contre le siège de soupape (32) du boîtier de soupape (10).

2. Soupape de sécurité selon la revendication 1, caractérisée par le fait que

(a) un épaulement annulaire (50) extérieur formé autour de la deuxième tubulure filetée (44) de la partie inférieure (20) du boîtier est appliqué contre le boîtier de soupape (10),

(b) la longueur du corps de siège de soupape (34) de l'ensemble formant la soupape de sécurité (16) est pratiquement égale à la distance axiale entre l'épaulement annulaire (50) formé autour de la deuxième tubulure filetée (44) de la partie inférieure (20) du boîtier et la face de la première tubulure taraudée (40).